**Europäisches Patentamt**

**European Patent Office**

**Office européen des brevets**

(11) Veröffentlichungsnummer: **0 287 912 B1**

(19)

# (12) EUROPÄISCHE PATENTSCHRIFT

(45) Veröffentlichungstag der Patentschrift:
26.09.90

(51) Int. Cl.⁵: **B65G 1/00, B65G 1/04**

(21) Anmeldenummer: **88105696.4**

(22) Anmeldetag: **11.04.88**

(54) **Durchschub-/ Einschublager für Rollpaletten, Gitterboxen und dergl.**

(30) Priorität: **13.04.87 CH 1410/87**

(43) Veröffentlichungstag der Anmeldung:
**26.10.88 Patentblatt 88/43**

(45) Bekanntmachung des Hinweises auf die Patenterteilung:
**26.09.90 Patentblatt 90/39**

(84) Benannte Vertragsstaaten:
**AT BE CH DE FR GB IT LI LU NL SE**

(56) Entgegenhaltungen:
EP-A- 0 126 431
GB-A- 1 408 674
US-A- 3 757 477

(73) Patentinhaber: **D + T LOGISTIKSYSTEME AG,
Hubelmattstrasse 576, CH-5723 Teufenthal(CH)**

(72) Erfinder: **Radaelli, Luigi, Heurüti 26,
CH-5726 Unterkulm(CH)**

(74) Vertreter: **Glaeser, Joachim, Dipl.-Ing. et al,
Patentanwalt Königstrasse 28, D-2000 Hamburg 50(DE)**

**Beschreibung**

Die Erfindung betrifft ein Durchschub-/Einschublager für Rollpaletten, Gitterboxen und dergl., aufweisend mindestens eine horizontal ausgerichtete Lagerebene, die in mehrere abgetrennte Lagerbereiche mit mehreren Lagerstollen unterteilt ist, wobei jede Lagerebene mindestens eine rechtwinklig zu den Lagerbereichen angeordnete Transportgasse aufweist, in denen Transportfahrzeuge verfahrbar sind, die die einzulagernden Rollpaletten jeweils am Anfang eines Lagerstollens absetzen und mit einer am Anfangsplatz eines Lagerstollens befindlichen Rollpalette kuppeln bzw. beim Herausnehmen entkuppeln, und aufweisend eine Feuerlöschanlage für das in mehrere autonome Brandabschnitte unterteilte Durchschub-/ Einschublager.

Aus der EP-B1 0.126.431 ist ein Durchschub- / Einschublager der eingangs erwähnten Art bekannt. Ein Nachteil dieses bekannten Lagers ist, daß im Brandfall und/oder in einem unvorhergesehenen Betriebszustand wie z.B. beim Auslaufen möglicherweise giftiger, aggressiver oder dampfbildender Stoffe für das Gesamtlager eine nur unzureichende Sicherheit vorhanden ist.

Aufgabe der vorliegenden Erfindung ist es, ein Durchschub- / Einschublager der eingangs erwähnten Gattung zu schaffen, das bei der Einlagerung giftiger, feuergefährlicher oder aggressiver Stoffe sowohl im Brandfall als auch in einem Störungsfall (sog. Chemie-Unfall) ein Höchstmaß an Sicherheit für das gesamte Lager gewährleistet.

Die gestellte Aufgabe wird durch die Merkmale des kennzeichnenden Teils des Anspruchs gelöst. Dadurch kann erreicht werden, daß bei giftigen, feuergefährlichen oder aggressiven, eingelagerten Stoffen am Entstehungsort eines Brandes oder eines außergewöhnlichen Betriebszustandes die Ursache durch Sauerstoffentzug und/oder Abschottung bekämpft werden kann.

Die verhältnismäßig kleinen Brandabschnitte ermöglichen eine Eindämmung und Lokalisierung unvorhergesehener Betriebsverhältnisse oder Brände am Entstehungsort.

Jeder Lagerstollen kann mit einer zur mindestens teilweisen Aufnahme von im Lagerstollen auslaufenden Stoffen dienenden Auffangwanne versehen sein. Diese Maßnahme dient zur Einschränkung einer Betriebsstörung.

Die Brandabschnitte werden vorteilhafterweise eine der einzulagernden Ware, deren Dämpfen und deren Zersetzungsprodukten widerstandsfähige Auskleidung aufweisen. Durch diese Maßnahme erreicht man auch bei der Einlagerung von sehr aggressiven Stoffen eine gute Betriebssicherheit.

Die Brandabschnitte können mit eine Funkenbildung verhindernden Führungsschienen und die sich darauf bewegbaren Rollpaletten mit eine Funkenbildung verhindernden Rädern versehen sein. Die Lagerung hochexplosiver Stoffe geschieht durch diese Maßnahme auch mit einer ausreichenden Sicherheit.

Die Brandabschnitte der Transportgassen nehmen vorteilhafterweise Transportfahrzeuge in explosionssicherer Ausführung auf. Diese Maßnahme ergibt auch bei der Lagerung explosionsgefährlicher Stoffe ein Höchstmaß an Sicherheit.

Zwischen dem Brandabschnitt des Aufzugsschachtes und dem Brandabschnitt der Transportgasse kann mindestens ein Abschlußtor eingesetzt sein. Ein Abschlußtor erhöht die Sicherheit des Lagers bezüglich der Ausdehnung einer Betriebsstörung zwischen den Lagerebenen.

Zwischen dem Brandabschnitt des Aufzugsschachtes und dem Brandabschnitt der Transportgasse kann mindestens ein explosionsgeschützter Förderer eingesetzt werden.

Durch die gefahrpotenzierenden Waren in einem Lagerstollen abweisende und sich neutralisierende Waren annehmende Steuereinrichtung kann das Ausmaß einer Betriebsstörung herabgesetzt werden. Bei bekannten Lagern hat dieser Aspekt nie Berücksichtigung gefunden. ·

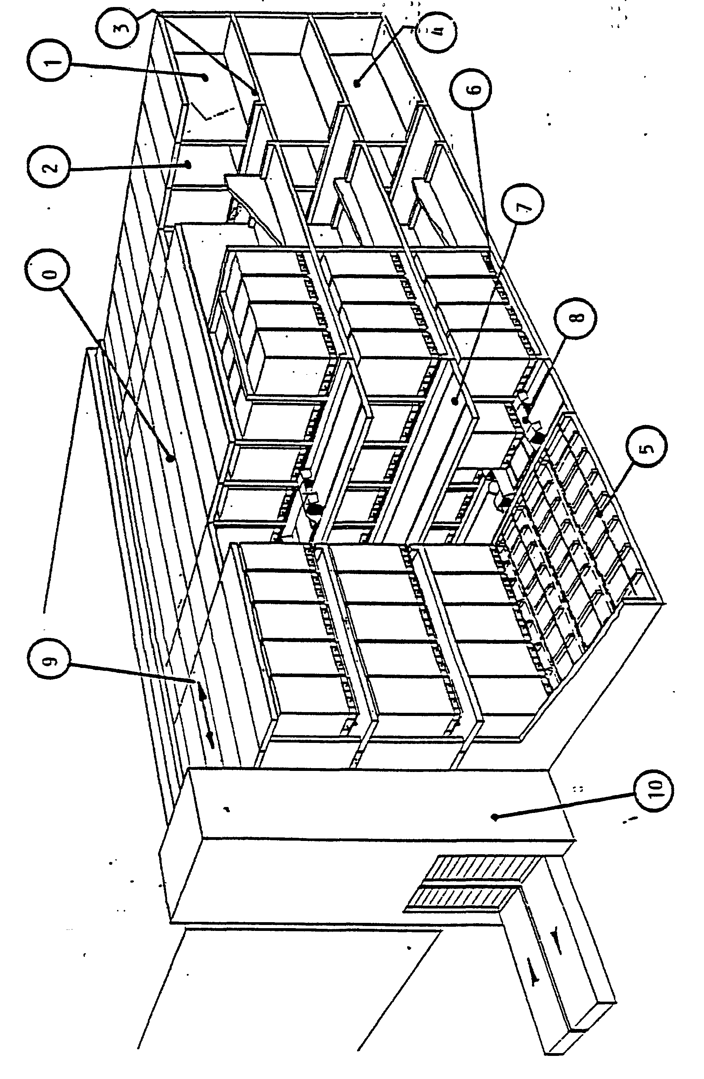

Im folgenden wird an Hand der beiliegenden Zeichnung ein Ausführungsbeispiel der Erfindung näher beschrieben. Die einzige Figur zeigt ein Durchschub- / Einschublager teilweise im Schnitt.

Das dargestellte Durchschub- / Einschublager 0 ist in Elementenbauweise aufgebaut und entspricht einer Wabenkonstruktion. Es besteht aus drei übereinander horizontal ausgerichteten Lagerebenen. Die mit Waren beladenen Rollpaletten 6 werden in den Lagerstollen 1 gelagert. Jede Lagerebene weist mehrere durch Zwischenböden 7 von der nächsten Lagerebene getrennte, zu den Lagerstollen 1 rechtwinklig angeordnete Transportgassen auf. In den Transportgassen sind verfahrbare Transportfahrzeuge 8 zur Ein- bzw. Auslagerung der Rollpaletten 6 vorhanden. Die Transportfahrzeuge 8 sind mit einer Einrichtung versehen, die die Rollpaletten 6 jeweils am Anfang eines Lagerstollens 1 absetzt und eine einzulagernde Rollpalette 6 mit einer an dem Anfangsplatz eines Lagerstollens 1 befindlichen Rollpalette 6 koppelt bzw. beim Herausnehmen entkoppelt.

Das in Elementenbauweise aufgebaute Durchschub- / Einschublager 0 ist in mehrere autonome, voneinander gegen Feuer und/oder gegen die eingelagerten chemischen Stoffe und deren Verbindungen widerstandsfähige Brandabschnitte unterteilt. Die einzelnen Brandabschnitte sind aus den Lagerstollen 1, aus den Transportgassen mit den Zwischenböden 7 und aus dem die Lagerebenen miteinander verbindenden Aufzugsschacht 10 gebildet. Die Lagerebenen sind voneinander durch die Böden bzw. Decken der Lagerstollen 1 und durch die die Transportgassen der einzelnen Lagerebenen trennenden Zwischenböden 7 getrennt. Diese Trennung ist gegen Feuer und/oder gegen die eingelagerten chemischen Stoffe und deren Verbindungen widerstandsfähig.

An den offenen Trennstellen zwischen je zwei Brandabschnitten ist mindestens ein im Brandfall und/oder in einem unvorhergesehenen Betriebszustand in Funktion tretender Gasvorhang 2 vorhanden. Dieser durch einen Gas-Sprinkler erzeugbare Gasvorhang besteht in den meisten Fällen aus Kohlendioxyd oder Halon. Der Gasvorhang 2 verhindert im Störungsfall einerseits die Ausbreitung der Störung und andererseits den Zutritt von Sauerstoff zur Störungsquelle. Die Lagerstollen 1 sind mit Auffangwannen 3 versehen. Diese Auffangwannen 3 fangen mindestens teilweise die im Lagerstollen 1 allenfalls auslaufenden Stoffe auf und tragen somit auch zur Sicherheit des Lagers bei.

Die Brandabschnitte weisen eine der einzulagernden Ware, deren Dämpfen und deren Zersetzungsprodukten widerstandsfähige Auskleidung 4 auf.

Die Brandabschnitte sind mit eine Funkenbildung verhindernden Führungsschienen 5 und die sich darauf bewegbaren Rollpaletten 6 mit eine Funkenbildung verhindernden Rädern versehen. Die Transportfahrzeuge 8 in den Transportgassen sind in explosionssicherer Ausführung. Diese Maßnahmen erlauben die sichere Lagerung von Explosivstoffen.

Zwischen dem Brandabschnitt des Aufzugsschachtes 10 und dem Brandabschnitt der Transportgasse ist ein Lagerstollenelement 9 als Förderkanal eingesetzt. Dieses Lagerstollenelement 9 ist aus Sicherheitsgründen mit einem zusätzlichen Abschlußtor verschließbar und nimmt einen explosionsgeschützten Förderer auf.

Für das Durchschub- / Einschublager ist eine Steuereinrichtung vorgesehen, die die gefahrpotenzierenden Waren in einem gemeinsamen Lagerstollen 1 abweist und sich neutralisierende Waren annimmt. Bei der Lagerung chemischer Stoffe erfährt das Lager durch diese Steuerung eine zusätzliche Sicherheit.

## Patentanspruch

Durchschub-/ Einschublager für Rollpaletten, Gitterboxen und dergl., aufweisend mindestens eine horizontal ausgerichtete Lagerebene, die in mehrere abgetrennte Lagerbereiche mit mehreren Lagerstollen unterteilt ist, wobei jede Lagerebene mindestens eine rechtwinklig zu den Lagerbereichen angeordnete Transportgasse aufweist, in denen Transportfahrzeuge verfahrbar sind, die die einzulagernden Rollpaletten jeweils am Anfang eines Lagerstollens absetzen und mit einer am Anfangsplatz eines Lagerstollens befindlichen Rollpalette kuppeln bzw. beim Herausnehmen entkuppeln, und aufweisend eine Feuerlöschanlage für das in mehrere autonome Bradabschnitte unterteilte Durchschub-/ Einschublager, dadurch gekennzeichnet, daß die einzelnen Brandabschnitte mindestens einen Lagerstollen (1), mindestens eine Transportgasse und mindestens einen bei mehreren Lagerebenen die Lagerebenen miteinander verbindenden Aufzugsschacht (10) umfassen, die Lagerebenen und/oder die Brandabschnitte voneinander durch eine gegen Feuer und/oder gegen die eingelagerten chemischen Stoffe und deren Verbindungen widerstandsfähige Schicht bzw. Auskleidung getrennt sind, an den offenen Trennstellen zwischen benachbarten Brandabschnitten mindestens ein im Brandfall und/oder in einem unvorhergesehenen Betriebszustand in einem der beiden benachbarten Brandabschnitte in Funktion tretender Gasvorhang (2) vorhanden ist, zwischen dem Brandabschnitt des Aufzugsschachtes (10) und dem Brandabschnitt der Transportgasse mindestens ein Abschlusstor eingesetzt ist und daß eine gefahrpotenzierende Waren in einem Lagerstollen (1) abweisende und sich neutralisierende Waren annehmende Steuereinrichtung vorgesehen ist.

## Claim

1. Push through-/slide in storage system for rolling pallets, lattice boxes and the like, comprising at least one horizontally aligned floor space for storing, which is divided into a plurality of separate storage areas with a plurality of storage galleries, wherein each floor space for storing comprises at least one transport path disposed at a right angel to said storing spaces, on which paths transport vehicles can be moved, which put down the rolling pallets to be stored each at the beginning of a storage gallery and couple it to a rolling pallet disposed at the starting place of a storage gallery or uncouple it when taken out, and comprising a fire-extinguishing plant for the push through/slide in storage system subdivided into a plurality of selfcontained fireproof sections, characterized in that the individual fire-proof sections comprise at least one storage gallery (1), at least one transport path and at least one lift shaft (10) connecting several floor spaces for storage, if any, that said floor spaces and/or the fire-proof sections are separated from one another by means of a layer or lining which is resistant to fire and/or to the stored chemical substances or their compounds, that at the open joints between adjacent fire-proof sections there exists at least one curtain of gas (2) active on the occasion of a fire and/or on the occasion of an unforeseen operating condition in any of the two adjacent fire-proof sections, that between the fire-proof section of the lift shaft (10) and the fire-proof section of the transport path there is provided at least one closing door and that there is provided a control device rejecting goods increasing danger from entering storage gallery (1) and accepting neutralizing goods.

## Revendication

1. Dispositif de stockage dans lequel on fait coulisser et on insère des palettes à rouleaux, conteneurs à clairevoie et similaires, comprenant au moins un plan de stockage horizontal, divisé en plusieurs zones de stockage comportant plusieurs compartiments de stockage, chaque plan de stockage présentant au moins une voie de transport disposée à angle droit par rapport aux zones de stockage, et dans laquelle peuvent circuler des véhicules de transport qui déposent les palettes à stocker chaque fois à l'entrée d'un compartiment de stockage et l'accouplent avec une palette qui se trouve à l'entrée d'un compartiment de stockage ou la désaccouplent pour l'enlever, et comprenant une installation d'extinction d'incendie pour le dispositif de stockage, divisée en plusieurs espaces coupe-feu autonomes, caractérisé en ce que, les espaces coupe-feu unitaires englobent au moins un compartiment de stockage (1), au moins une voie de transport et au moins, dans le cas où il y a plusieurs plans de stockage, une cage d'ascenseur (10) reliant les plans de

3

stockage entre eux, les plans de stockage et/ou les espaces coupe-feu sont séparés les uns des autres par une couche ou un revêtement capable de résister au feu et/ou aux substances chimiques stockées et leurs combinaisons, il est prévu, aux points de sectionnement ouverts entre espaces coupe-feu adjacents, au moins un rideau de gaz qui entre en fonction en cas d'incendie et/ou au cas d'une situation anormale dans l'un des deux espaces coupe-feu voisins, au moins une porte d'arrêt est disposée entre l'espace coupe-feu de la cage d'ascenseur (10) et l'espace coupe-feu de la voie de transport, et en ce qu'il est prévu un dispositif de commande qui refuse les denrées pouvant constituer un danger dans un compartiment de stockage (1) et qui accepte les denrées qui se neutralisent.